## Europäisches Patentamt

## European Patent Office

## Office européen des brevets

(11) Veröffentlichungsnummer: **0 221 200**
**B1**

(12) **EUROPÄISCHE PATENTSCHRIFT**

(45) Veröffentlichungstag der Patentschrift:
**05.07.89**

(21) Anmeldenummer: **85114243.0**

(22) Anmeldetag: **08.11.85**

(51) Int. Cl.⁴: **F28F 25/08**, F28C 1/02,
**B01D 53/18, F28F 3/04**

(54) Vorrichtung zur Steigerung des Wärme- und/oder Stoffaustausches zwischen einem Gas und einer Flüssigkeit.

(43) Veröffentlichungstag der Anmeldung:
**13.05.87 Patentblatt 87/20**

(45) Bekanntmachung des Hinweises auf die Patenterteilung:
**05.07.89 Patentblatt 89/27**

(84) Benannte Vertragsstaaten:
**AT BE CH DE FR GB IT LI LU NL SE**

(56) Entgegenhaltungen:
EP-A- 0 114 967
EP-A- 0 117 077
DE-A- 2 126 758
DE-A- 2 313 418
DE-A- 3 222 892
DE-B- 1 103 361
DE-B- 1 276 061
DE-C- 423 474
FR-A- 811 879
FR-A- 1 016 728
FR-A- 2 128 146
US-A- 2 661 197
US-A- 3 804 389
US-A- 4 045 193
US-A- 4 218 408

(73) Patentinhaber: **ENERGIAGAZDALKODASI INTEZET,**
**33-34, Bem-rakpart, H-1027 Budapest II(HU)**

(72) Erfinder: **Abonyi, Mihály, Dipl.-Ing., Bókai A.u.48,**
**H-1181 Budapest(HU)**
Erfinder: **Bakay, Arpád, Dr. Dipl.-Ing., Riadó u. 6/a,**
**H-1026 Budapest(HU)**
Erfinder: **Bergmann, György, Dipl.-Ing., Andor u. 5,**
**H-1119 Budapest(HU)**
Erfinder: **Bódás, János, Dipl.-Ing., Fillér u. 41,**
**H-1026 Budapest(HU)**
Erfinder: **Gösi, Péter, Dr. Dipl.-Ing., Felsözöldmáli ut 5/b,**
**H-1025 Budapest(HU)**
Erfinder: **Kovács, Gyula, Dipl.-Ing., Vérhalom u. 43,**
**H-1025 Budapest(HU)**
Erfinder: **Pohl, Oszkár, Dipl.-Ing., Szépvölgyi ut 3/a,**
**H-1036 Budapest(HU)**
Erfinder: **Tomcsányi, Gábor, Dipl.-Ing., Határör ut 27/b,**
**H-1122 Budapest(HU)**
Erfinder: **Köröss, Lajos, Dr. Dipl.-Ing., Kende u. 18,**
**H-1111 Budapest(HU)**

(74) Vertreter: **Patentanwälte Viering & Jentschura,**
**Steinsdorfstrasse 6, D-8000 München 22(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zur Steigerung des Wärme- und/oder Stoffaustausches zwischen einem Gas und einer Flüssigkeit, insbesondere für Kühltürme, mit gitterartig und kanalwandartig angeordneten Kontaktflächen.

Bei zwischen Gasen und Flüssigkeiten vor sich gehenden Wärme- und Stoffwechselprozessen ist es weit verbreitet bekannt, den Kontakt zwischen einer Flüssigkeit, z.B. Wasser, und einem gasförmigen Medium, z.B. Luft, dadurch zu erreichen, daß man eine Flüssigkeit über entsprechende flüssigkeitsprühende Düsen auf verhältnismäßig große ebene Flächen, zweckmäßig auf Asbestzementplatten, leitet, während man das Gas entlang der ebenen Flächen strömen läßt. Der an der großen Fläche sich ausbildende Flüssigkeitsfilm wird in Strömungsrichtung dicker, so daß nicht alle Bereiche der herabrinnenden Flüssigkeit mit dem nach oben strömenden Gas, z.B. mit der Luft, in eine intensive Berührung gelangen. Ein weiterer Nachteil besteht darin, daß einige Flüssigkeitstropfen derart zwischen den Platten hindurchfallen können, daß sie überhaupt nicht mit den Platten in Berührung kommen. Schließlich ist es als nachteilig zu betrachten, daß die Asbestzementplatten aus Festigkeitsgründen eine gewisse Dicke aufweisen müssen, wodurch einerseits das Gewicht der Vorrichtung und andererseits der Widerstand an der mit dem Gas beströmten Seite erhöht wird.

Zu diesem Zweck wurden bereits gitterartig ausgebildete Vorrichtungen vorgeschlagen, wie sie z.B. in der HU-PS 160 015 beschrieben sind. Bei diesen bekannten Vorrichtungen werden mehrere Gitter übereinander angeordnet, wodurch der an den Gittern von oben nach unten fließende Flüssigkeitsfilm von Zeit zu Zeit unterbrochen wird und Gas und Flüssigkeit in eine intensive Berührung geraten. Aber auch diese Vorrichtung weist den Nachteil auf, daß aus Festigkeitsgründen eine gewisse Dicke der Gitter unerläßlich ist. Außerdem wird durch die zur Richtung der Gasströmung senkrechte Ausbreitung der Widerstand der Vorrichtung an der mit dem Gas beströmten Seite bedeutend erhöht, so daß bei Kühltürmen zur Bewegung der Luft entweder ein größerer Ventilator eingebaut oder bei Türmen mit natürlichem Zug der Schlot höher gebaut werden muß.

Eine weitere Verbindung für Wärme- und/oder Stoffaustausch ist aus der US-PS 4 218 408 bekannt, bei welcher alternierend horizontale und vertikale Kontaktflächen aufeinander folgen. Mehrere einzelne Kontaktflächen sind hierbei nebeneinander angeordnet und die so gebildeten Lagen in einem Gestell übereinander gestapelt.

Der Erfindung liegt die Aufgabe zugrunde, eine gattungsgemäße Vorrichtung für den Wärme- und Stoffaustausch zu schaffen, welche geringes Gewicht und geringen Strömungswiderstand aufweist und gleichzeitig aber einen intensiven Kontakt sowie einen guten Wärmeübergang zwischen einer Flüssigkeit und einem Gas gewährleistet.

Dies wird durch die Erfindung dadurch erreicht, daß die Kontaktflächen von einander senkrecht sich kreuzenden Leisten bestehenden Gittern und von aus Plattenstreifen mit einer Wanddicke von weniger als 1 mm gebildeten Kanalwandsystem, deren Kanäle einen annähernd quadratischen oder trapezförmigen Querschnitt aufweisen, gebildet werden, wobei die Gitter und die Kanalwandsysteme alternierend aufeinander folgen und die Wände der Kanalsysteme von unten nach oben entweder wellenförmig oder unter einem von der Vertikalen abweichenden Winkel oder in vertikaler Richtung verlaufen.

Die verwendeten Gitter dienen einerseits zur Versteifung der zusammengesetzten Vorrichtung bzw. schützen das aus äußerst dünnen, vorteilhafterweise synthetisch hergestellten Platten bestehende Kanalsystem, und sorgen andererseits durch das an der oberen Kante der Gitter vorhandene Rinnensystem dafür, daß die von dem Kanalsystem vertikal abströmenden Flüssigkeitsfilme unterbrochen werden und sich die Flüssigkeit in dauernder Wiederholung in horizontaler Richtung verteilt.

Bei einer vorteilhaften Ausführungsform der erfindungsgemäßen Vorrichtung stimmen die Querschnittsabmessungen der einzelnen Kanäle des aus abstandsgleich verlaufenden Kanälen bestehenden Kanalsystems, z.B. der gegenseitige horizontale Abstand der Kanalwände, d.h. die horizontale Teilung des Kanalsystems, mit der horizontalen Teilung der über dem Kanalsystem liegenden Gitterflächen überein oder sind proportional kleiner, d.h. ihre Abmessungen betragen z.B. die Hälfte oder ein Viertel. Durch diese Anordnung liegt jede einzelne oder jede zweite oder jede vierte Kanalwand unter der vertikalen Leiste des Gittersystems in damit übereinstimmender Richtung. Die sich von unten nach oben wellenförmig erstreckenden Kanäle sind so ausgestaltet, daß die untere und obere, d.h. die Eintritts- und Austrittsstrecken vertikal verlaufen. Ähnlicherweise enthält das Kanalsystem eine vertikale untere bzw. obere Eintrittsstrecke, sofern sich die Kanäle von unten nach oben unter einem von der Vertikalen abweichenden Winkel erstrecken, d.h. die abstandsgleich verlaufenden Wände des Kanalsystems mit der Horizontalen einen größeren Winkel als 30° einschließen.

Die oben erwähnten Maßnahmen dienen zur Herabsetzung des Strömungswiderstandes der Vorrichtung an der Gasseite, gleichzeitig aber tragen sie zur Lenkung der von oben nach unten fließenden Flüssigkeitsströmung bei.

Als besonders vorteilhaft ist eine Ausführungsform der erfindungsgemäßen Vorrichtung anzusehen, bei der an der Wand der Kanäle des Kanalsystems zu der Strömungsrichtung der Flüssigkeit senkrecht verlaufende Wellen, in Form von kleinen turbulenzbildenden Noppen vorgesehen sind. Die Wanddicke der einzelnen Kanalwände liegt immer unter 1 mm. Eine Vorrichtung mit so dünnen Wänden und kleinen Vorsprüngen kann vorteilhafterweise aus Kunststoff durch Vakuumformung erzeugt werden.

Die untere Kante der Wände des Kanalsystems kann horizontal sein, aber es ist vorteilhaft, wenn die Kanalwände, die in ihrer Teilung nicht den Gitterwänden entsprechen, d.h. deren Teilung kleiner als jene der Gitterwände ist, mit einer bogenförmigen unteren Kante versehen sind, oder wenn diese Kante schräg verläuft und auf die Mittellinie der benachbarten Gitterwand gerichtet ist.

Das einen wesentlichen Teil der erfindungsgemäßen Vorrichtung bildende Gitter, das im wesentlichen aus vertikal liegenden Leisten zusammengesetzt ist, trägt zu der guten Vermischung der Flüssigkeit mit dem Gas dadurch bei, daß an der oberen Kante der Leisten des Gitters ein schmales flüssigkeitsverteilendes Rinnensystem ausgebildet ist. Das Rinnensystem sammelt das Wasser nicht nur aus dem darüberliegenden Kanalsystem, sondern verteilt das Wasser auch in horizontaler Richtung, wenn die Wasserverteilung ungleich ist, und gleicht die eventuellen Ungleichmäßigkeiten aus, die sich aus einer ungleichmäßigen Funktion der sich über der gesamten wärme- und stoffaustauschenden Vorrichtung angeordneten flüssigkeitssprühenden Düsen ergeben, durch die die Flüssigkeit vorteilhafterweise unter einem den Atmosphärendruck wesentlich übersteigenden Druck eingesprüht wird.

Bei einer vorteilhaften Ausführungsform der Gitter stehen an verschiedenen Stellen des Gitters z.B. an den Ecken, mit dem Gitter zusammenhängende oder gesondert von diesem ausgebildete Ständer, deren Höhe größer ist als die Summe der Höhe des zwischen zwei übereinander liegenden Gittern vorhandenen Kanalsystems und der Höhe der Gitter ist. Die Ständer können in die Bohrungen, die am oberen Ende der unter den Ständern liegenden Gitter ausgestaltet sind, eingeschnappt werden. Auf diese Weise kann mittels der Ständer eine kompakte wärme- und stoffaustauschende Vorrichtung gebildet werden, deren Festigkeit und Stabilität durch die mit den Ständern ineinander eingeschnappten Gitter gesichert wird, bzw. die Gitter schützen quasi das zwischen ihnen liegende, aus den äußerst dünnen und leicht schadhaft werdenden, aber einen geringen Widerstand an der Gasseite aufweisenden filmartigen Platten gebildete Kanalsystem. Demnach stellt die Vorrichtung einen Block dar, in dessen unterster und oberster Ebene jeweils ein Gitter vorhanden ist, wodurch die zwischen ihnen alternierend angeordneten Gitter und das Kanalsystem geschützt sind.

Die Erfindung wird anhand einiger vorteilhafter Ausführungsformen mit Hilfe der Zeichnung näher erläutert. In der Zeichnung zeigt:

Fig. 1 den Querschnitt eines Teils der erfindungsgemäßen Vorrichtung mit einem sich wellenförmig erstreckenden Kanalsystem,

Fig. 2 die Draufsicht und den Schnitt der Vorrichtung entsprechend Fig. 1,

Fig. 3 den Schnitt eines Teils einer erfindungsgemäßen Vorrichtung mit einem von der Vertikalen abweichenden schrägen Kanalsystem,

Fig. 4 den Schnitt eines Teils einer erfindungsgemäßen Vorrichtung mit einem vertikal verlaufenden Kanalsystem,

Fig. 5 die Draufsicht des nach Fig. 4 ausgebildeten Teils der erfindungsgemäßen Vorrichtung und

Fig. 6 eine aus mehreren Teilen zusammengesetzte komplette erfindungsgemäße Vorrichtung.

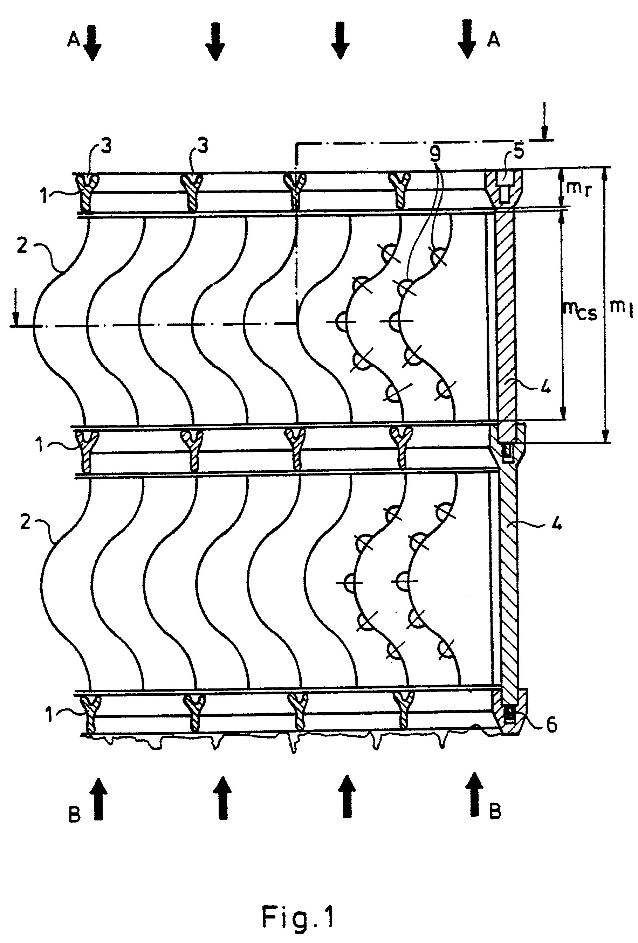

Aus Fig. 1 ist im Querschnitt ein Teil einer Vorrichtung ersichtlich, die im wesentlichen aus einem aus einander senkrecht kreuzenden geraden Leisten zusammengesetzten Gitter 1, einem aus sich unter dem Gitter erstreckenden parallelen Kanälen bestehenden Kanalsystem 2, einem darunter angeordneten zweiten Gitter 1 und einem auf dieses Gitter 1 nach unten folgenden Kanalsystem 2 besteht. An der oberen Kante der die Gitter 1 bildenden Leisten, die im Querschnitt y-förmig ausgebildet sind, sorgt das dadurch entstehende Rinnensystem 3 für die horizontale Verteilung der Flüssigkeit, die von oben her, aus der Richtung "A", auf die Vorrichtung geleitet wird oder von dem über einem dem Rinnensystem 3 vorgeschalteten Kanalsystem 2 herabrinnt, bzw. für die Unterbrechung des an der Wand des Kanalsystems 2 in ggfs. zu großer Dicke abfließenden Flüssigkeitsfilms.

Die Wirkungsweise der Vorrichtung wird im folgenden ausführlich beschrieben.

Von oben her, aus der Richtung "A", strömt die Flüssigkeit, z.B. Wasser, während von unten her, aus der Richtung "B", die Wärme und das an dem Stoffaustausch teilnehmende andere Medium, das Gas – z.B. Luft – strömt. Vorteilhafterweise ragen an ausgewählten Stellen des Gittersystems, z.B. an den Ecken, mit dem Gitter zusammenhängende oder selbständige Ständer 4 nach oben, deren Höhe $m_1$ größer ist als die Summe aus der Höhe $m_r$ des Gitters 1 und der Höhe $m_{cs}$ des Kanalsystems. Die Ständer 4 können in Bohrungen 5 – die am oberen Ende der Ständer 4 des sich darunter befindenden Gitters 1 ausgestaltet sind – eingeschnappt werden. Für diesen Zweck sind am unteren Ende der Ständer Bolzen 6 vorgesehen. Aus Fig. 1 sind auch mögliche turbulenzbildende Vorsprünge 9 ersichtlich.

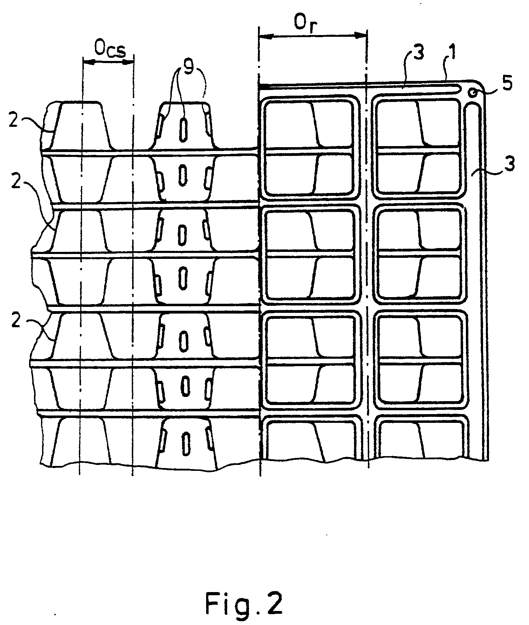

Aus Fig. 2 ist die Draufsicht auf die nach Fig. 1 ausgebildete Vorrichtung bzw. deren Schnitt ersichtlich. Die rechte Seite der Fig. 2 stellt die Draufsicht der Gitter 1 dar und zeigt, daß die Gitter aus einander senkrecht kreuzenden Leisten zusammengesetzt sind, in deren nach oben weisenden Enden ein flüssigkeitsverteilendes Rinnensystem 3 ausgebildet ist.

Die linke Seite der Fig. 2 zeigt die Draufsicht des Kanalsystems 2 in der unterhalb der Gitterebene innerhalb des Kanalsystems liegenden Schnittebene. Es ist ersichtlich, daß das Kanalwandsystem 2 aus Streifen besteht, die aus dünnen Platten mit einer im allgemeinen unter 1 mm liegenden Wanddicke gebogen worden sind. Die Teilung der Plattenstreifen, d.h. die Teilung $O_{cs}$ des Kanalwandsystems 2, beträgt bei der in der Zeichnung dargestellten Ausführungsform die Hälfte der Gitterteilung $O_r$. Auf diese Weise paßt sich die Teilung des Kanalwandsystems 2 der Teilung der Gitter derart an, daß sie entweder damit übereinstimmt oder die Hälfte derselben beträgt.

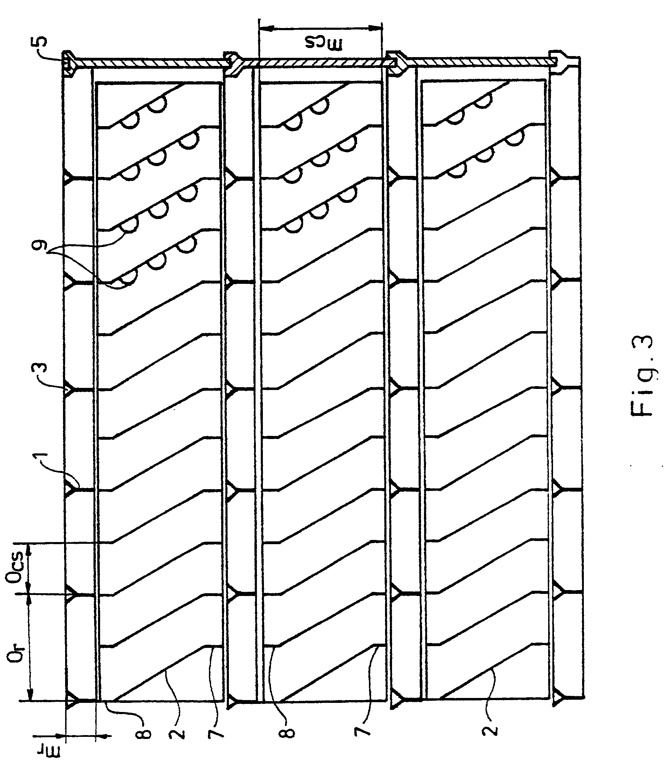

Aus Fig. 3 ist eine weitere Ausführungsform ersichtlich, bei der die Wände des Kanalsystems 2 schräg zur Vertikalen unter einem Winkel von etwa 45° verlaufen. Auch hier sind die Gitter 1 vorgesehen, die jeweils einem Kanalsystem 2 nachgeordnet sind. Bei der aus Fig. 3 ersichtlichen Ausführungsform verläuft jedoch nur der mittlere Abschnitt der Wände des Kanalsystems 2 schräg zur Vertikalen, während der untere Abschnitt 7 und der obere Abschnitt 8 der Wände vertikal ausgerichtet sind, um den Strömungswiderstand zu reduzieren bzw. eine plötzliche Richtungsänderung zu vermeiden. Auch bei dieser Vorrichtung sind turbulenzbildende Vorsprünge 9 vorgesehen.

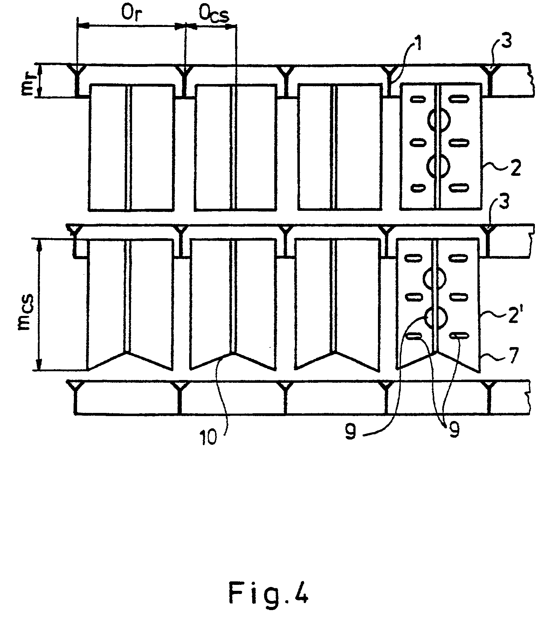

Aus Fig. 4 ist im Schnitt eine weitere mögliche Ausführungsform der erfindungsgemäßen Vorrichtung ersichtlich, bei der zwischen den untereinander liegenden Gittern 1 teilweise oder vollständig vertikal verlaufende Kanalwandsysteme 2 ausgebildet sind.

Auch bei der aus Fig. 4 ersichtlichen Vorrichtung richtet sich die Teilung $O_{cs}$ nach der Teilung $O_r$ der Gitter 1, in diesem Fall beträgt die Teilung $O_{cs}$ die Hälfte der Teilung $O_r$. Die Besonderheit der Ausführungsform nach Fig. 4 besteht jedoch insbesondere darin, daß das Kanalsystem 2 zwischen die Gitterflächen 1 hineinragt, d.h., daß die Höhe $m_{cs}$ des Kanalsystems 2 kleiner ist als die Summe der Höhen $m_r$ der Gitterflächen 1 und $m_{cs}$ des Kanalsystems.

Bei der aus Fig. 4 ersichtlichen Ausführungsform sind die turbulenzbildenden Vorsprünge 9 an der rechten Wand des Kanalsystems 2 gezeigt, die zur weiteren Steigerung des Wärme- und Stoffaustausches dienen.

Wie aus Fig. 4 ersichtlich, sind bei dem am tiefsten liegenden Kanalsystem 2 die Gaseintrittskanten 10 der Kanalwände derart schräg ausgestaltet, daß ihr außenliegendes Ende in Richtung zur Mittellinie der Rinnen in den darunter benachbarten Gitterleisten weist.

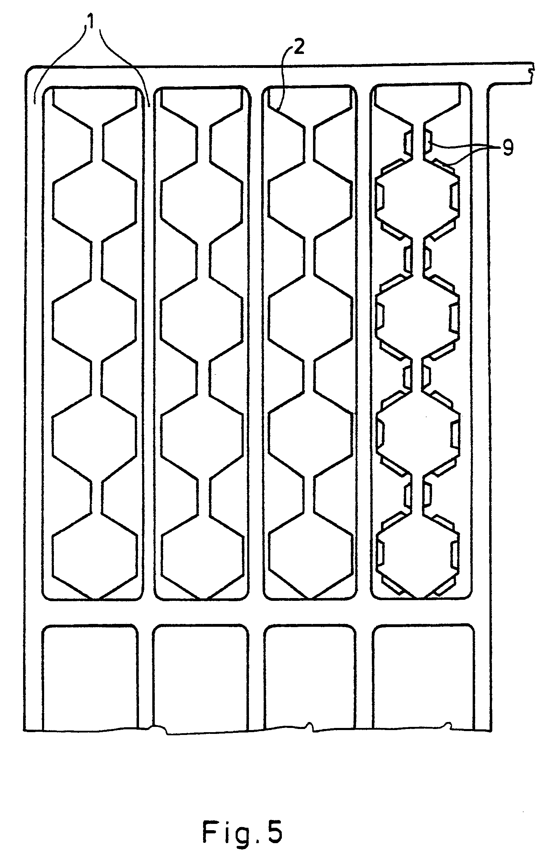

Fig. 5 zeigt die Draufsicht der nach Fig. 4 ausgebildeten Ausführungsform der erfindungsgemäßen Vorrichtung. Auch hier sind das zwischen die Gitter 1 hineinragende, aus äußerst dünnen Plattenstreifen gebogene Kanalsystem 2 und deren turbulenzbildende Vorsprünge 9 zu sehen.

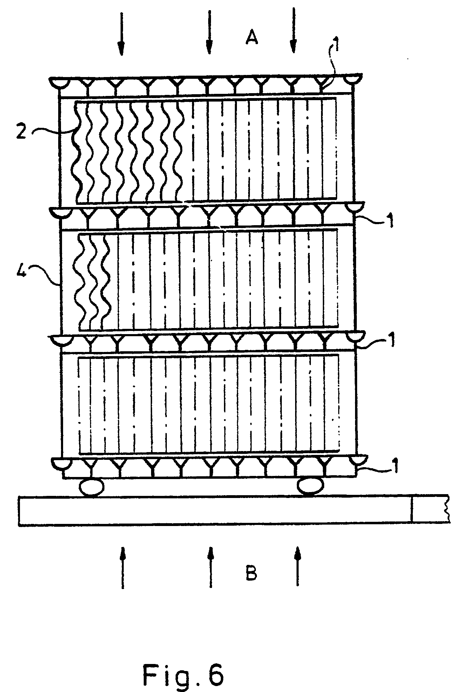

Fig. 6 stellt schematisch die Montagezeichnung einer erfindungsgemäßen kompletten Vorrichtung für den Wärme- und Stoffaustausch dar. Es ist ersichtlich, daß zwischen den untereinander angeordneten Gittern 1 jeweils ein Kanalsystem 2 vorhanden ist und an ausgewählten Stellen der Gitter 1, bei der vorliegenden Ausführungsform an den Ecken, die Füsse 4 die Vorrichtung quasi zusammenhalten, so daß ein kompletter Block gebildet wird, wodurch insbesondere die untersten und die obersten Gitter das aus den dünnen filmartigen Plattenstreifen gebildete Kanalsystem 2 schützen.

**Patentansprüche**

1. Vorrichtung zur Steigerung des Wärme- und/oder Stoffaustausches zwischen einem Gas und einer Flüssigkeit, insbesondere für Kühltürme und Entgaser, mit gitterartig und kanalwandartig angeordneten Kontaktflächen, dadurch gekennzeichnet, daß die Kontaktflächen von aus einander senkrecht sich kreuzenden Leisten bestehenden Gittern (1) und von aus Plattenstreifen mit einer Wanddicke von weniger als 1 mm gebildeten Kanalwandsystemen (2), deren Kanäle einen annähernd quadratischen oder trapezförmigen Querschnitt aufweisen, gebildet werden, wobei die Gitter (1) und die Kanalwandsysteme (2) alternierend aufeinander folgen und die Wände der Kanalsysteme von unten nach oben entweder wellenförmig oder unter einem von deren Vertikalen abweichenden Winkel oder in vertikaler Richtung verlaufen.

2. Vorrichtung nach Anspruch 1, dadurch gekennzeichnet, daß die horizontale Teilung ($O_{cs}$) des sich von unten nach oben erstreckenden Kanalsystems (2) an die horizontale Teilung ($o_r$) der Gitter (1) angepaßt ist, mit dieser übereinstimmt oder deren Hälfte oder einem Viertel derselben entspricht.

3. Vorrichtung nach Anspruch 1 oder 2, dadurch gekennzeichnet, daß der untere Abschnitt (7) und der obere Abschnitt (8) der Wände des sich von unten nach oben wellenförmig erstreckenden Kanalsystems (2) vertikal verlaufen.

4. Vorrichtung nach Anspruch 1 oder 2, dadurch gekennzeichnet, daß der von der Vertikalen abweichende Winkel, den die Wände des sich von unten nach oben erstreckenden Kanalsystems (2) mit der Horizontalen einschließen, größer als 30° ist, der untere Abschnitt (7) und der obere Abschnitt (8) der Wände des Kanalsystems (2) aber vertikal verlaufen.

5. Vorrichtung nach einem der Ansprüche 1 bis 4, dadurch gekennzeichnet, daß an den Wänden des Kanalwandsystems (2) turbulenzbildende Vorsprünge (9) vorgesehen sind.

6. Vorrichtung nach einem der Ansprüche 1 bis 5, dadurch gekennzeichnet, daß die Gaseintrittskante (10) des unteren Abschnitts (7) der Wände des Kanalwandsystems (2) bogenförmig oder schräg verläuft.

7. Vorrichtung nach einem der Ansprüche 1 bis 6, dadurch gekennzeichnet, daß an der Oberseite der Leisten der Gitter (1) ein flüssigkeitsverteilendes Rinnensystem (3) ausgebildet ist.

8. Vorrichtung nach einem der Ansprüche 1 bis 7, dadurch gekennzeichnet, daß von dem Gitter (1) mit diesem verbundene oder selbständige Ständer (4) nach oben ragen, deren Höhe ($m_1$) größer als die Summe der Höhe ($m_{cs}$) des zwischen zwei Gittern liegenden Kanalsystems (2) und der Höhe ($m_r$) der Gitter ist.

9. Vorrichtung nach Anspruch 8, dadurch gekennzeichnet, daß die Ständer (4) in Bohrungen (5), die an der entsprechenden Stelle des darunter liegenden Gitters ausgestaltet sind, eingeschnappt sind.

**Claims**

1. Apparatus for increasing the heat and/or matter exchange between a gas and a liquid, in particular for cooling towers and degassers, including contact surfaces arranged in a grid-like and channel-wall-like manner, characterized in that the contact surfaces are formed by grids (1) consisting of ledges intersecting perpendicularly and by channel wall systems (2) made of plate strips of a wall thickness of less than 1 mm, the channel wall systems having channels of an approximately square or trapezoidal cross-section, wherein the grids (1) and channel wall systems (2) are arranged in alternate succession and the walls of the channel systems extend from the bottom towards the top either in an undulating manner, or at an angle deviating from the vertical line, or in the vertical direction.

2. Apparatus according to claim 1, characterized in that the horizontal partition ($O_{cs}$) of the channel system (2) extending from the bottom towards the top is adapted to the horizontal partition ($O_r$) of the grids (1), matches with it or corresponds to a half or a quarter of it.

3. Apparatus according to claim 1 or 2, characterized in that the lower segment (7) and the upper segment (8) of the walls of the channel system (2) extending in an undulating manner from the bottom towards the top, extend vertically.

4. Apparatus according to claim 1 or 2, characterized in that the angle deviating from the vertical line and included between the horizontal line and the walls of the channel system (2) extending from the bottom towards the top, is greater than 30°, whereas the lower segment (7) and the upper segment (8) of the walls of the channel system (2) extend vertically.

5. Apparatus according to any of the claims 1 to 4, characterized in that projections (9) causing turbulence are provided on the walls of the channel wall system (2).

6. Apparatus according to any of the claims 1 to 5, characterized in that the gas inlet edge (10) of the lower segment (7) of the walls of the channel wall system (2) extends in an arcuate or oblique manner.

7. Apparatus according to any of the claims 1 to 6, characterized in that a liquid-distributing groove system (3) is arranged on the top surface of the ledges of the grids (1).

8. Apparatus according to any of the claims 1 to 7, characterized in that from the grid (1), posts (4) extend upwards which are connected with the grid (1) or are separate, and have a height ($m_l$) greater than the sum of the height ($m_{cs}$) of the channel system (2) between two grids and the height ($m_r$) of the grids.

9. Apparatus according to claim 8, characterized in that the posts (4) are snapped into borings (5) arranged at the corresponding place of the grid disposed beneath.

**Revendications**

1. Dispositif destiné à augmenter l'échange de chaleur et/ou de matière entre un gaz et un liquide, en particulier dans des tours de refroidissement et des dégazeurs, comportant des surfaces de contact disposées en forme de grilles et en forme de parois formant des canaux, caractérisé en ce que les surfaces de contact sont constituées par des grilles (1) formées par des barrettes qui se croisent perpendiculairement et par des bandes de plaques comportant des systèmes (2) de parois formant des canaux ayant une épaisseur de paroi inférieure à 1 mm, dont les canaux présentent une section transversale sensiblement carrée ou trapézoïdale, les grilles (1) et les systèmes (2) de parois formant les canaux se suivant en alternance et les parois des systèmes de canaux s'étendant de bas en haut soit en formant des ondulations, soit sous un angle qui s'écarte de leur verticale, soit verticalement.

2. Disposition selon la revendication 1, caractérisé en ce que le pas vertical ($O_{cs}$) du système (2) de canaux s'étendant de bas en haut est adapté au pas horizontal ($O_t$) de la grille (1), correspondant exactement à celui-ci, ou à sa moitié, ou à son quart.

3. Dispositif selon la revendication 1 ou 2, caractérisé en ce que la partie inférieure (7) et la partie supérieure (8) des parois du système de canaux (2) allant de bas en haut en formant des ondulations s'étendent verticalement.

4. Dispositif selon la revendication 1 ou 2, caractérisé en ce que l'angle qui s'écarte de la verticale, que forment avec l'horizontale les parois du système (2) de canaux s'étendant de bas en haut, est supérieur à 30°, mais que la partie inférieure (7) et la partie supérieure (8) des parois du système (2) de canaux s'étendent verticalement.

5. Dispositif selon une des revendications 1 à 4, caractérisé en ce que des saillies (a) génératrices de turbulences sont prévues sur les parois du système (2) de parois formant des canaux.

6. Dispositif selon une des revendications 1 à 5, caractérisé en ce que le bord d'entrée (10) de gaz de la partie inférieure (7) des parois du système (2) de parois formant des canaux s'étend de façon courbe ou oblique.

7. Dispositif selon une des revendications 1 à 6, caractérisé en ce qu'un système (3) de rigoles répartissant le liquide est formé sur la face supérieure des barrettes des grilles (1).

8. Dispositif selon une des revendications 1 à 7, caractérisé en ce que des montants (4) dépassent de la grille (1) vers le haut, en étant reliés à celle-ci ou en étant indépendants, leur hauteur ($m_l$) étant supérieure à la somme de la hauteur ($m_{cs}$) du système (2) de canaux situé entre deux grilles et de la hauteur ($m_l$) de la grille.

9. Dispositif selon la revendication 8, caractérisé en ce que les montants (4) sont emprisonnés dans des alésages (5) qui sont formés à l'emplacement correspondant de la grille située en dessous.

Fig.1

Fig.2

Fig.3

EP 0 221 200 B1

Fig.4

Fig. 5

Fig. 6